# EUROPÄISCHE PATENTSCHRIFT

(11) **EP 3 874 450 B1**
(45) Veröffentlichungstag und Bekanntmachung des Hinweises auf die Patenterteilung: **08.07.2026**
(21) Anmeldenummer: 19789606.1
(22) Anmeldetag: 09.10.2019
(51) Int. Cl.: G06T 7/00, G06T 7/20, G06T 11/00, G02B 27/01, G06V 10/26, G06V 20/56

(54) **VERFAHREN ZUR VERMEIDUNG EINER SICHTFELDSTÖRUNG FÜR EINE BEDIENPERSON EINES OBJEKTES, VORRICHTUNG ZUR DURCHFÜHRUNG DES VERFAHRENS SOWIE FAHRZEUG UND COMPUTERPROGRAMM**
METHOD FOR AVOIDING A FIELD OF VIEW DISTURBANCE FOR AN OPERATOR OF AN OBJECT, DEVICE FOR CARRYING OUT THE METHOD AS WELL AS VEHICLE AND COMPUTER PROGRAM
PROCÉDÉ POUR LA PRÉVENTION D'UNE PERTURBATION DE CHAMP DE VISION POUR UN OPÉRATEUR D'UN OBJET, DISPOSITIF POUR L'EXÉCUTION DU PROCÉDÉ AINSI QUE VÉHICULE ET PROGRAMME INFORMATIQUE

(30) Priorität: 01.11.2018 DE 102018218746
(43) Veröffentlichungstag der Anmeldung: 08.09.2021
(73) Patentinhaber: VOLKSWAGEN AKTIENGESELLSCHAFT, 38440 Wolfsburg (DE)
(72) Erfinder: FOLTIN, Dorit, 38446 Wolfsburg (DE); GÄDE, Andreas, 31228 Peine (DE); BECKER, Chistian, 38527 Meine (DE); SCHWERTNER, Sandro, 02763 Zittau (DE)
(86) Internationale Anmeldenummer: PCT/EP2019/077334
(87) Internationale Veröffentlichungsnummer: WO 2020/088902

(56) Entgegenhaltungen:
- WO-A1-2016/184541
- DE-A1- 102007 045 834
- DE-A1- 102013 016 241
- DE-A1- 102014 008 152
- DE-B4- 102007 045 834

## Beschreibung

Der Vorschlag betrifft das technische Gebiet von Fahrerinformationssystemen, die auch unter dem Begriff Infotainmentsystem bekannt sind. Solche Systeme werden vor allem in Fahrzeugen eingesetzt. Es besteht aber auch die Möglichkeit des Einsatzes der Erfindung bei Fußgängern, Radfahrern, etc. mit Datenbrille. Der Vorschlag betrifft weiterhin eine entsprechend ausgelegte Vorrichtung zur Durchführung des Verfahrens sowie ein Fahrzeug und ein Computerprogramm.

Eine Zukunftsvision in der Automobilbranche ist es, die Windschutzscheibe des eigenen Fahrzeugs mit virtuellen Elementen bespielen zu können, um dem Fahrer einige Vorteile zu ermöglichen. Genutzt wird die sogenannte "Augmented Reality"-Technologie (AR). Weniger geläufig ist der entsprechende deutschsprachige Begriff der "erweiterten Realität". Dabei wird die reale Umgebung mit virtuellen Elementen angereichert. Das hat mehrere Vorteile: Der Blick nach unten auf andere Displays als der Windschutzscheibe entfällt, da viele relevante Informationen auf der Windschutzscheibe abgebildet werden. So muss der Fahrer seinen Blick nicht von der Fahrbahn abwenden. Das Besondere an den AR-Darstellungen ist, dass eine positionsgenaue Verortung der virtuellen Elemente in der realen Umwelt möglich ist. An dem Ort, wo der Fahrer den Blick in der realen Umwelt hinwendet, wird auch das virtuelle Element eingeblendet. Mit diesen Einblendungen kann die Real-Umwelt aus Sicht des Nutzers "überlagert" und mit zusätzlichen Informationen versehen werden, z.B. kann ein Navigationspfad eingeblendet werden. Dadurch ist ein geringerer kognitiver Aufwand seitens des Fahrers erreicht, da keine Interpretation einer abstrahierenden Grafik erfolgen muss, sondern ein intuitives Verständnis im Sinne der normalen Wahrnehmungsgewohnheiten stattfinden kann.

Zurzeit werden Head-Up Displays (HUD) in den Fahrzeugen eingesetzt. Diese haben auch den Vorteil, dass das Bild des HUD näher an der realen Umwelt erscheint. Bei diesen Displays handelt es sich eigentlich um Projektionseinheiten, die ein Bild auf die Windschutzscheibe projizieren. Dieses Bild befindet sich jedoch aus der Sicht des Fahrers je nach Bauart des Moduls wenige Meter bis 15 Meter vor dem Fahrzeug. Dies hat den Vorteil, dass die eingeblendeten Informationen so präsentiert werden, dass die Augen des Fahrers selbst von Akkommodationstätigkeit entlastet werden.

Das "Bild" setzt sich dabei folgendermaßen zusammen: Es handelt sich weniger um ein virtuelles Display, sondern eher um eine Art "Schlüsselloch" in die virtuelle Welt. Die virtuelle Umgebung wird theoretisch über die reale Welt gelegt und enthält die virtuellen Objekte, die den Fahrer bei der Fahrt unterstützen und informieren. Die begrenzte Anzeigefläche des HUD hat zur Folge, dass davon ein Ausschnitt gesehen werden kann. Man schaut also durch die Anzeigefläche des HUD auf den Ausschnitt der virtuellen Welt. Da diese virtuelle Umgebung die reale Umgebung ergänzt, spricht man in diesem Fall auch von einer "Mixed Reality".

Zur Zeit wird ebenfalls intensiv an Technologien gearbeitet, die später ein autonomes Fahren ermöglichen sollen. Ein erster Ansatz ist dabei, den Fahrer nicht komplett von seinen Aufgaben zu entlasten, sondern dafür Sorge zu tragen, dass der Fahrer jederzeit die Steuerung des Fahrzeuges übernehmen kann. Der Fahrer nimmt außerdem Überwachungsfunktionen wahr. Durch neuere Technologien im Bereich der Fahrerinformationssysteme wie Head-Up Display (HUD) ist es möglich, den Fahrer besser über das Geschehen im Umfeld seines Fahrzeuges zu informieren.

Um dies zu erreichen, ist auch der Einsatz neuerer Technologien (Fahrzeug-zu-Fahrzeug-Kommunikation, Einsatz von Datenbanken, Fahrzeugsensorik, etc.) nötig, damit umfassende Informationen über Objekte (insb. Fahrzeuge) im direkten Umfeld des eigenen Fahrzeugs verfügbar sein werden. Im Bereich Fahrzeugsensorik werden insbesondere die folgenden Komponenten genannt, die eine Umfeldbeobachtung ermöglichen: RADAR-Geräte entsprechend Radio Detection and Ranging, LIDAR-Geräte, entsprechend Light Detection and Ranging, hauptsächlich für den Bereich Abstandserfassung / -warnung, und Kameras mit entsprechender Bildverarbeitung für den Bereich der Objekterkennung. Diese Daten über die Umwelt können als Basis für systemseitige Fahrempfehlungen, Warnungen, etc. herangezogen werden. Beispielsweise sind so Anzeigen / Warnungen darüber denkbar, in welche Richtung (möglicherweise in die eigene Trajektorie) ein anderes, umgebendes Fahrzeug abbiegen will.

Die Fahrzeug-zu-Fahrzeug-Kommunikation ist mittlerweile auch mittels Mobilkommunikation mit Systemen wie LTE entsprechend Long Term Evolution möglich. Hier wurde von der Organisation 3GPP eine Spezifikation mit Namen LTE V2X verabschiedet. Als Alternative stehen auf WLAN-Technologie beruhende Systeme für die Fahrzeug-Direktkommunikation zur Verfügung, insbesondere das System nach WLAN p. Ebenfalls erwähnt wird die neueste Mobilfunkgeneration 5G, die ebenfalls V2V bzw. V2X Kommunikation ermöglicht.

Aufgrund der derzeitigen Entwicklung hin zu höheren Autonomiestufen, wo aber viele Fahrzeuge nach wie vor noch vom Fahrer gesteuert werden, ist davon auszugehen, dass entsprechende zusätzliche Informationen mittelfristig bereits für manuell geführte Fahrzeuge und nicht erst langfristig für hochautomatisierte Systeme genutzt werden können. Dabei kann die im Folgenden noch näher beschriebene Lösung sowohl für manuell gesteuerte als auch für automatisch gesteuerte Fahrzeuge eingesetzt werden.

Aus der DE 10 2012 010 120 A1 ist ein Verfahren zur Einstellung eines Head-Up-Displays eines Fahrzeuges bekannt. Mit dem Verfahren lässt sich auch die Lage der Eye-Box einstellen. Dabei betrifft die Eyebox einen Bereich im Fahrzeug, in dem sich die Augen des Fahrers befinden müssen, damit das virtuelle Bild auf der Windschutzscheibe wahrgenommen werden kann. Dazu wird ein Testbild auf die Windschutzscheibe projiziert und zumindest ein Kantenbereich der Eyebox mit einer Kamera aufgenommen.

Aus der DE 10 2005 037 797 A1 ist eine Vorrichtung zur automatischen Kalibrierung einer Projektionseinrichtung für ein Head-Up-Display eines Fahrzeuges bekannt, bei der insbesondere eine automatisierbare Kalibrierung möglich ist. Dabei werden die für die Geometrieentzerrung und Multiprojektorkalibrierung berechneten Daten in sogenannten Warp-Feldern gespeichert.

Ein großer Vorteil der bisher bekannten "Augmented Reality"-Anzeigen (AR-Anzeigen) besteht darin, die entsprechenden Anzeigen direkt innerhalb bzw. als Teil der Umwelt darzustellen. Relativ naheliegende Beispiele beziehen sich meist auf den Bereich der Navigation. Während klassische Navigationsanzeigen (in herkömmlichen HUD) in der Regel schematische Darstellungen anzeigen (z.B. einen rechtwinklig verlaufenden Pfeil nach rechts als Zeichen dafür, dass bei nächster Gelegenheit rechts abgebogen werden soll), bieten AR-Anzeigen wesentlich effektivere Möglichkeiten. Da die Anzeigen als "Teil der Umwelt" dargestellt werden können, sind äußerst schnelle und intuitive Interpretationen für den Nutzer möglich. Dennoch weisen die bisher bekannten Ansätze auch verschiedene Probleme auf, für die zum jetzigen Zeitpunkt keine Lösungen bekannt sind. Dies wurde im Rahmen der Erfindung erkannt. Ein Problemkreis betrifft das Auftreten von Sichtfeldstörungen, die verursacht werden durch die Einblendung von virtuellen Zusatzinformationen in das Sichtfeld des Fahrers. Solche Sichtfeldstörungen können sich auf die Verdeckung von Objekten in der realen Umwelt beziehen.

Die DE 10 2014 008152 A1 beschreibt ein Verfahren zur augmentierten Darstellung einer virtuellen Zusatzinformation in einem Bild einer realen Umgebung bzw. vor dieser realen Umgebung. Hierbei wird die reale Umgebung mittels einer Aufnahmeeinheit erfasst. Anhand einer die Umgebung repräsentierenden digitalen Karte oder anhand der erfassen realen Umgebung wird eine Anzeigeregion ermittelt. Die Zusatzinformation wird innerhalb dieser Anzeigeregion den Hintergrund des Bildes bzw. die reale Umgebung überlagernd, unter Berücksichtigung einer Vermeidung von Überlagerungen mit realen oder virtuellen Objekten ausgegeben.

Eine andere Art von Störungen betrifft die Ablenkung der Bedienperson bzw. des Fahrers im Fall des Einsatzes bei einem Fahrzeug. Dies kann sich dann ergeben, wenn durch eine aufeinanderfolgende Einblendung eine blinkende, flackernde bzw. pulsierende Darstellung entsteht.

Eingeblendete Navigationspfade und eingeblendete Hinweisschilder (Geschwindigkeitsbeschränkungen, Gefahrensymbole, etc.) sind großflächige Einblendungen, die reale Objekte verdecken können. Es besteht also der Bedarf für weitere Verbesserungen bei der Einblendung virtueller Zusatzinformationen in das Sichtfeld der Bedienperson. Die Erfindung setzt sich zur Aufgabe, einen solchen Ansatz zu finden.

Diese Aufgabe wird durch ein Verfahren zur Vermeidung einer Sichtfeldstörung für eine Bedienperson eines Objektes gemäß Anspruch 1, eine Vorrichtung zur Durchführung des Verfahrens gemäß Anspruch 9 sowie ein Fahrzeug gemäß Anspruch 11 und Computerprogramm gemäß Anspruch 12 gelöst.

Die abhängigen Ansprüche beinhalten vorteilhafte Weiterbildungen und Verbesserungen der Erfindung entsprechend der nachfolgenden Beschreibung dieser Maßnahmen.

Die Lösung gemäß des Vorschlages besteht in einem Verfahren zur Vermeidung einer Sichtfeldstörung für eine Bedienperson eines Objektes durch ein in das Sichtfeld der Bedienperson eingeblendetes Bild mit einer virtuellen Zusatzinformation. Dabei wird eine Bildanalyse des Bildes mit der virtuellen Zusatzinformation durchgeführt, mit der überprüft wird, ob durch die Einblendung des Bildes mit der virtuellen Zusatzinformation eine Sichtfeldstörung hervorgerufen wird, und wobei eine Maßnahme zur Unterbindung der Sichtfeldstörung durchgeführt wird, wenn eine Sichtfeldstörung erkannt worden ist. Mit dieser Lösung können die beschriebenen Sichtfeldstörungen schnell erkannt werden und schnell unterbunden werden. Das Verfahren wird laufend durchgeführt, so dass alle Einblendungen überprüft werden können. So wird das Gefahrenpotential, das mit den Sichtfeldstörungen verbunden ist, entschärft.

Die Bildanalyse besteht darin, mehrere aufeinanderfolgende Bilder zu analysieren, wobei von Bild zu Bild eine immer feinere Einteilung des Bildes in Segmente erfolgt und die Segmente einzeln analysiert werden. So können lokale Bereiche im Bild immer weiter eingegrenzt werden, wo eine Verdeckung gegeben ist.

Dabei wird der durch die Einblendung der virtuellen Zusatzinformation bewirkte Befüllungsgrad des jeweiligen Bildes bzw. eines oder mehrerer Segmente des jeweiligen Bildes in dem Bildanalyseschritt ermittelt. Wenn zum Beispiel der Befüllungsgrad in einem solchen Segment 100% ist, so ist klar, dass ein darin zu sehendes Objekt verdeckt wird.

Der Befüllungsgrad ergibt sich durch Berechnung des Verhältnisses von der Anzahl der durch die Einblendung der virtuellen Zusatzinformation befüllten Bildpunkte zu der Gesamtzahl der Bildpunkte, die befüllt werden können. Diese Art der Berechnung lässt sich ohne großen Aufwand mit einem Spezial-Chip, z.B. FPGA-Chip realisieren, die dann auch kostengünstig in einem Produkt einsetzbar sind.

In einer Variante des Verfahrens wird eine Bildanalyse durchgeführt, mit der überprüft wird, ob durch die Einblendungen ein Problem mit der Verdeckung von Bereichen im Sichtfeld der Bedienperson verursacht wird. Verdeckungen können ein hohes Gefahrenpotential bergen, insbesondere, wenn bewegliche Objekte verdeckt werden und dadurch eine Kollision droht, weil die Bedienperson das Objekt nicht erkennen kann.

In einer anderen Variante des Verfahrens erfolgt eine Bildanalyse mehrerer aufeinanderfolgender Bilder mit Einblendungen von virtuellen Zusatzinformationen, mit der überprüft wird, ob durch die Einblendungen ein störendes Blinken, Flackern oder Pulsieren in das Sichtfeld der Bedienperson verursacht wird. Das Gefahrenpotential solcher Einblendungen besteht in einer Ablenkung der Bedienperson. Die Maßnahme bringt daher den Vorteil, dass auch derartige Sichtfeld-Störungen unterbunden werden können.

Zur Erkennung einer Verdeckungsgefahr kann in einer Variante wie folgt vorgegangen werden. Es werden zur Prüfung auf Verdeckung von Bereichen im Sichtfeld jeweils drei aufeinanderfolgende Bilder analysiert, wobei für das erste Bild der Befüllungsgrad des Gesamtbildes bestimmt wird, für das zweite Bild die Befüllungsgrade von vier gleich großen Bildsegmenten bestimmt werden, und für das dritte Bild die Befüllungsgrade von neun gleich großen Bildsegmenten bestimmt werden. Die Gesamtzahl der Bildsegmente deckt dabei jeweils das ganze Bild ab. In einer anderen Variante könnten auch weitere Bilder in dem Analyseschritt berücksichtigt werden. Dies hängt auch damit zusammen, wie leistungsfähig der Spezial-Chip ist, der die Bildanalyse durchführen soll.

Zur Erkennung einer Verdeckungsgefahr kann in einer anderen Variante wie folgt vorgegangen werden. Es werden zur Prüfung auf Verdeckung von Bereichen im Sichtfeld aufeinanderfolgende Bilder analysiert, wobei die Bilder in verschiedene Segmente eingeteilt werden. Zum Ersten wird das Gesamtbild als ein Segment betrachtet. Zum Zweiten wird das Bild in vier gleich große Bildsegmente eingeteilt. Zum Dritten wird das Bild in neun gleich große Bildsegmente eingeteilt. Dann werden die Befüllungsgrade der jeweiligen Bildsegmente bestimmt. Wie schnell die Bildsegmente analysiert werden können, hängt von der Leistungsfähigkeit des Spezial-Chips ab, der die Bildanalyse durchführen soll.

Es ist vorteilhaft, wenn die ermittelten Befüllungsgrade des Bildes und der Segmente abgestuft überprüft werden, und auf ein Problem mit der Verdeckung von Bereichen im Sichtfeld der Bedienperson erkannt wird, wenn bei der Überprüfung festgestellt wird, dass wenigstens eines der überprüften Kriterien erfüllt ist. Wenn bereits ein größeres Segment stark befüllt ist, so wird dies auch auf die entsprechenden Segmente der feineren Einteilung zutreffen.

Es ist weiterhin von Vorteil, wenn zur Prüfung, ob durch die Einblendungen ein störendes Blinken, Flackern oder Pulsieren in das Sichtfeld der Bedienperson verursacht wird, die ermittelten Befüllungsgrade von einer Anzahl von aufeinanderfolgenden Prüfdurchläufen analysiert werden, wobei auf ein Problem mit einem störenden Blinken, Flackern oder Pulsieren der Einblendungen im Sichtfeld der Bedienperson erkannt wird, wenn periodische Änderungen der ermittelten Befüllungsgrade festgestellt werden. Dieser Algorithmus lässt sich am besten per Software mit einem Mikrorechner realisieren.

Zur Unterbindung der Sichtfeldstörung ist es vorteilhaft, wenn eine Abschaltung der Einblendung oder eine Verringerung der Helligkeit der Einblendung erfolgt. Diese Maßnahme lässt sich einfach mit den im Head-Up-Display vorhandenen Mitteln durchführen. Für eine Änderung der Berechnung der Bilder für die Einblendungen wäre größerer Entwicklungsaufwand erforderlich.

Für eine Vorrichtung zur Durchführung des Verfahrens ist es vorteilhaft, wenn die Vorrichtung eine Anzeigeeinheit, mit der ein Bild mit einer virtuellen Zusatzinformation in das Sichtfeld der Bedienperson des Objektes eingeblendet werden kann, eine Bildanalyseeinheit und eine Auswerteeinheit aufweist, mit denen eine Bildanalyse des Bildes mit der virtuellen Zusatzinformation durchgeführt wird und überprüft wird, ob durch die Einblendung des Bildes mit der virtuellen Zusatzinformation eine Sichtfeldstörung hervorgerufen wird, wobei die Bildanalyseeinheit und Auswerteeinheit so ausgelegt sind, die Sichtfeldstörung zu unterbinden, wenn eine Sichtfeldstörung erkannt worden ist. wobei durch die Bildanalyseeinheit und die Auswerteeinheit bei einer Bildanalyse mehrerer aufeinanderfolgender Bilder von Bild zu Bild eine immer feinere Einteilung des Bildes in Segmente erfolgt und die Segmente einzeln analysiert werden, und wobei der durch die Einblendung der virtuellen Zusatzinformation bewirkte Befüllungsgrad des jeweiligen Bildes bzw. eines oder mehrerer Segmente des jeweiligen Bildes ermittelt wird, wobei sich der Befüllungsgrad durch Berechnung des Verhältnisses von der Anzahl der durch die Einblendung der virtuellen Zusatzinformation befüllten Bildpunkte zu der Gesamtzahl der Bildpunkte, die befüllt werden können, ergibt.

Diese Vorrichtung kann insbesondere als Teil eines Head-Up-Displays HUD für ein Fahrzeug realisiert werden. Sie kann aber auch bei einer Datenbrille oder einem Monitor eingesetzt werden, auf dem ein Kamerabild angezeigt wird, in das die Zusatzinformation eingeblendet wird.

Ein vorteilhafte Variante der Vorrichtung besteht noch darin, dass die Bildanalyseeinheit und die Auswerteeinheit weiterhin so ausgelegt sind, dass sie eine Abschaltung der Einblendung oder eine Verringerung der Helligkeit der Einblendung bewirken, wenn eine Sichtfeldstörung erkannt worden ist. Diese Maßnahme lässt sich besonders einfach in einem Head-Up-Display realisieren.

In vorteilhafter Weise kann die erfindungsgemäße Vorrichtung in einem Fahrzeug eingesetzt werden. Im Fahrzeug wird die Erfindung vorzugsweise so realisiert, dass die Vorrichtung im Fahrzeug fest installiert ist, z.B. in Form eines Head-Up Displays.

Wie erwähnt, kann die Erfindung in vorteilhafter Weise auch eingesetzt werden, wenn die Anzeigeeinheit einer Datenbrille entspricht. Dann lässt sich das erfindungsgemäße Verfahren selbst bei Fußgängern, Radfahrern, Motorradfahrern usw. einsetzen.

Für ein Computerprogramm, das in einer Recheneinheit der Vorrichtung zur Abarbeitung kommt, um das erfindungsgemäße Verfahren durchzuführen, gelten die entsprechenden Vorteile wie zu dem erfindungsgemäßen Verfahren beschrieben.

Ausführungsbeispiele der Erfindung sind in den Zeichnungen dargestellt und werden nachfolgend anhand der Figuren näher erläutert.

Es zeigen:
- Fig. 1: das Prinzip der Einblendung von Informationen in das Sichtfeld des Fahrers eines Fahrzeuges während der Fahrt mit Hilfe eines Head-Up Displays;
- Fig. 2: das typische Cockpit eines Fahrzeuges;
- Fig. 3: das Blockschaltbild des Infotainmentsystems des Fahrzeuges;
- Fig.4: eine typisches Beispiel einer Einblendung von virtueller Zusatzinformation in das Sichtfeld des Fahrers eines Fahrzeuges;
- Fig. 5: ein vereinfachtes Blockdiagramm einer Head-Up-Display-Einheit;
- Fig. 6: eine Darstellung des Analysefensters bei der Prüfung auf Sichtfeldstörungen durch AR-Einblendungen;
- Fig. 7: ein Flussdiagramm für ein Programm, mit dem eine Bildanalyse durchgeführt wird;
- Fig. 8: ein Flussdiagramm für ein Programm, mit dem die Ergebnisse der Bildanalyse ausgewertet werden, um eine erste Art von Sichtfeldstörungen zu erkennen; und
- Fig. 9: ein Flussdiagramm für ein Programm, mit dem die Ergebnisse der Bildanalyse ausgewertet werden, um eine zweite Art von Sichtfeldstörungen zu erkennen.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

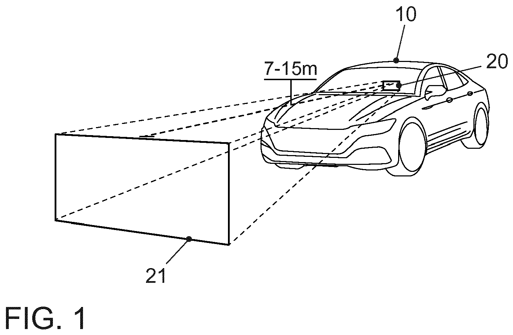

Fig. 1 veranschaulicht die prinzipielle Funktionsweise eines Head-Up Displays. Das Head-Up Display 20 ist im Fahrzeug 10 unterhalb/hinter dem Kombiinstrument im Armaturenbrettbereich angebracht. Durch Projektion auf die Windschutzscheibe werden Zusatzinformationen in das Sichtfeld des Fahrers eingeblendet. Diese Zusatzinformationen erscheinen so, als seien sie auf eine Projektionsfläche 21 im Abstand von 7 - 15 m vor dem Fahrzeug 10 projiziert. Durch diese Projektionsfläche 21 hindurch bleibt aber die reale Welt sichtbar. Mit den eingeblendeten Zusatzinformationen wird quasi eine virtuelle Umgebung erzeugt. Die virtuelle Umgebung wird theoretisch über die reale Welt gelegt und enthält die virtuellen Objekte, die den Fahrer bei der Fahrt unterstützen und informieren. Es wird aber nur auf einen Teil der Windschutzscheibe projiziert, so dass die Zusatzinformationen nicht beliebig im Sichtfeld des Fahrers angeordnet werden können.

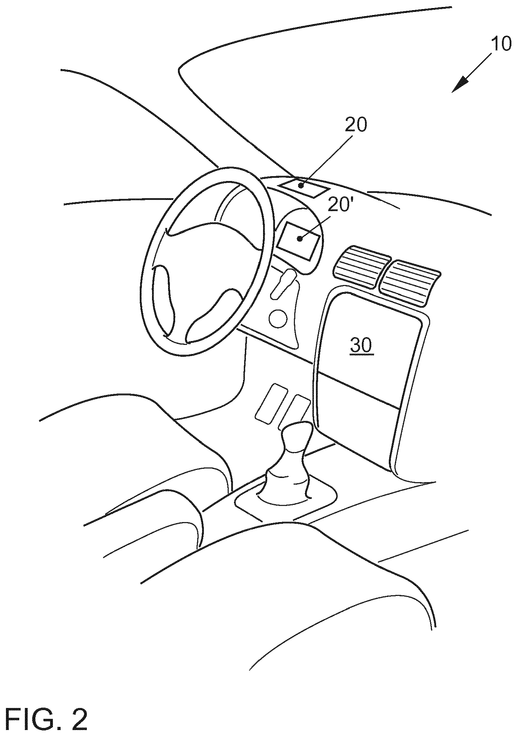

Fig. 2 zeigt das Cockpit des Fahrzeuges 10. Dargestellt ist ein Personenkraftwagen Pkw. Als Fahrzeug 10 kämen allerdings beliebige andere Fahrzeuge ebenfalls in Betracht. Beispiele von weiteren Fahrzeugen sind: Busse, Nutzfahrzeuge, insbesondere Lastkraftwagen Lkw, Landmaschinen, Baumaschinen, Schienenfahrzeuge usw. Der Einsatz der Erfindung wäre allgemein bei Landfahrzeugen, Schienenfahrzeugen, Wasserfahrzeugen und Luftfahrzeugen möglich.

In dem Cockpit sind drei Anzeigeeinheiten eines Infotainmentsystems dargestellt. Es handelt sich um das Head-Up-Display 20, einen berührungsempfindlichen Bildschirm 30, der in der Mittelkonsole angebracht ist, und ein kleineres Display, das Teil des Kombiinstrumentes 110 ist. Bei der Fahrt liegt die Mittelkonsole nicht im Sichtfeld des Fahrers. Deshalb werden die AR-Einblendungen während der Fahrt auf der HUD-Anzeigeeinheit 20 eingeblendet.

Der berührungsempfindliche Bildschirm 30 dient dabei insbesondere zur Bedienung von Funktionen des Fahrzeugs 10. Beispielsweise können darüber ein Radio, ein Navigationssystem, eine Wiedergabe von gespeicherten Musikstücken und/oder eine Klimaanlage, andere elektronische Einrichtungen oder andere Komfortfunktionen oder Applikationen des Fahrzeugs 10 gesteuert werden. Zusammengefasst wird häufig von einem "Infotainment-System" gesprochen. Ein Infotainmentsystem bezeichnet bei Fahrzeugen, speziell Pkw, die Zusammenführung von Autoradio, Navigationssystem, Freisprecheinrichtung, Fahrerassistenzsystemen und weiterer Funktionen in einer zentralen Bedieneinheit. Der Begriff Infotainment ist ein Kofferwort, zusammengesetzt aus den Worten Information und Entertainment (Unterhaltung). Zur Bedienung des Infotainmentsystems wird hauptsächlich der berührungsempfindliche Bildschirm 30 ("Touchscreen") benutzt, wobei dieser Bildschirm 30 insbesondere von einem Fahrer des Fahrzeugs 10, aber auch von einem Beifahrer des Fahrzeugs 10 gut eingesehen und bedient werden kann. Unterhalb des Bildschirms 30 können zudem mechanische Bedienelemente, beispielsweise Tasten, Drehregler oder Kombinationen hiervon, wie beispielsweise Drückdrehregler, in einer Eingabeeinheit 50 angeordnet sein.

Typischerweise ist auch eine Lenkradbedienung von Teilen des Infotainmentsystems möglich. Diese Einheit ist nicht separat dargestellt, sondern wird als Teil der Eingabeeinheit 50 betrachtet.

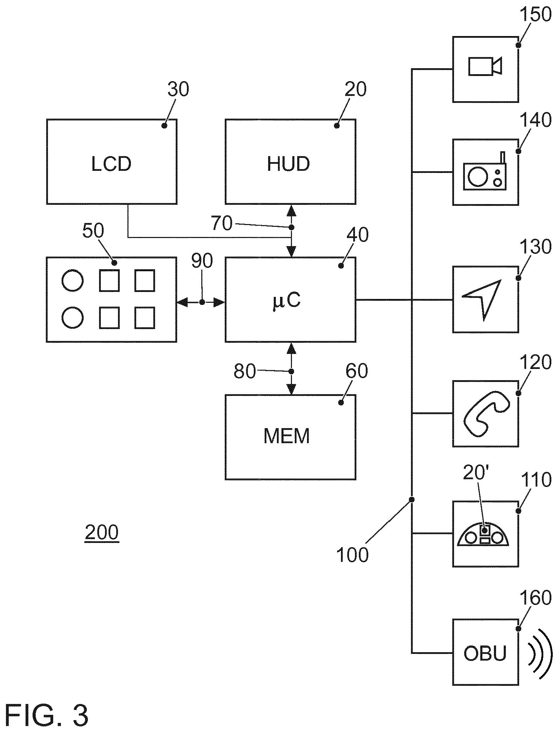

Fig. 3 zeigt schematisch ein Blockschaltbild des Infotainmentsystems 200 sowie beispielhaft einige Teilsysteme oder Applikationen des Infotainmentsystems. Die Bedienungs-vorrichtung umfasst die berührungsempfindliche Anzeigeeinheit 30, eine Recheneinrichtung 40, eine Eingabeeinheit 50 und einen Speicher 60. Die Anzeigeeinheit 30 umfasst sowohl eine Anzeigefläche zum Anzeigen veränderlicher grafischer Informationen als auch eine über der Anzeigefläche angeordnete Bedienoberfläche (berührungssensitive Schicht) zum Eingeben von Befehlen durch einen Benutzer.

Die Anzeigeeinheit 30 ist über eine Datenleitung 70 mit der Recheneinrichtung 40 verbunden. Die Datenleitung kann nach dem LVDS-Standard ausgelegt sein, entsprechend Low Voltage Differential Signalling. Über die Datenleitung 70 empfängt die Anzeigeeinheit 30 Steuerdaten zum Ansteuern der Anzeigefläche des Touchscreens 30 von der Recheneinrichtung 40. Über die Datenleitung 70 werden auch Steuerdaten der eingegebenen Befehle von dem Touchscreen 30 zu der Recheneinrichtung 40 übertragen. Mit der Bezugszahl 50 ist die Eingabeeinheit bezeichnet. Ihr zugehörig sind die schon erwähnten Bedienelemente wie Tasten, Drehregler, Schieberegler, oder Drehdrückregler, mit deren Hilfe die Bedienperson über die Menüführung Eingaben machen kann. Unter Eingabe wird allgemein das Anwählen einer ausgewählten Menüoption verstanden, wie auch das Ändern eines Parameters, das Ein- und Ausschalten einer Funktion usw.

Die Speichereinrichtung 60 ist über eine Datenleitung 80 mit der Recheneinrichtung 40 verbunden. In dem Speicher 60 ist ein Piktogrammverzeichnis und/oder Symbolverzeichnis hinterlegt mit den Piktogrammen und/oder Symbolen für die möglichen Einblendungen von Zusatzinformationen. Hier können auch die Punkte / Symbole abgelegt sein, die für die Berechnung der Raster-Einblendung als Grundlage dienen.

Die weiteren Teile des Infotainmentsystems Kamera 150, Radio 140, Navigationsgerät 130, Telefon 120 und Kombiinstrument 110 sind über den Datenbus 100 mit der Vorrichtung zur Bedienung des Infotainmentsystems verbunden. Als Datenbus 100 kommt die Highspeed-Variante des CAN-Bus nach ISO Standard 11898-2 in Betracht. Alternativ käme z.B. auch der Einsatz eines auf Ethernet-Technologie beruhenden Bussystems wie BroadR-Reach in Frage. Auch Bussysteme, bei denen die Datenübertragung über Lichtwellenleiter geschieht, sind einsetzbar. Als Beispiele werden genannt der MOST Bus (Media Oriented System Transport) oder der D2B Bus (Domestic Digital Bus). Hier wird noch erwähnt, dass die Kamera 150 als konventionelle Videokamera ausgelegt sein kann. In diesem Fall nimmt sie 25 Vollbilder/s auf, was bei dem Interlace-Aufnahmemodus 50 Halbbilder/s entspricht. Alternativ kann eine Spezialkamera eingesetzt werden, die mehr Bilder/s aufnimmt, um die Genauigkeit der Objekterkennung bei sich schneller bewegenden Objekten zu erhöhen. Es können mehrere Kameras zur Umfeldbeobachtung eingesetzt werden. Daneben könnten auch die schon erwähnten RADAR- oder LIDAR-Systeme ergänzend oder alternativ eingesetzt werden, um die Umfeldbeobachtung durchzuführen oder zu erweitern. Für die drahtlose Kommunikation nach innen und außen ist das Fahrzeug 10 mit einem Kommunikationsmodul 160 ausgestattet. Dieses Modul wird oft auch als On-Board Unit bezeichnet. Es kann für die Mobilfunk-Kommunikation, z.B. nach LTE Standard, entsprechend Long Term Evolution, ausgelegt sein. Ebenfalls kann es für WLAN-Kommunikation, entsprechend Wireless LAN, ausgelegt sein, sei es für die Kommunikation zu Geräten der Insassen im Fahrzeug oder für die Fahrzeug-zu-Fahrzeug Kommunikation etc.

Das erfindungsgemäße Analyseverfahren zur Vermeidung unzulässiger Sichtfeldstörungen durch Informations-Einblendungen seitens einer HUD-Anzeigeeinheit 20 wird im Folgenden anhand eines Ausführungsbeispiels erläutert.

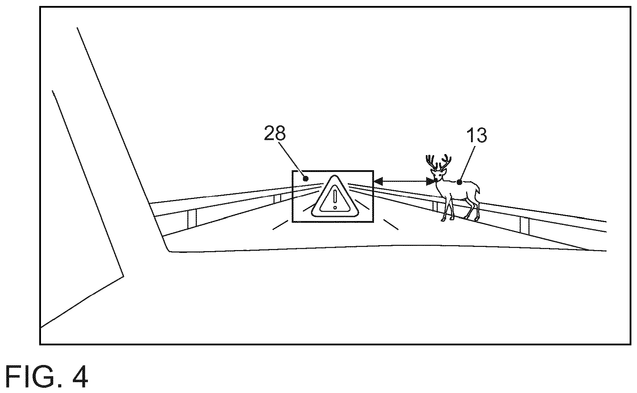

Zunächst wird in Fig. 4 ein Beispiel einer Informationseinblendung durch das Head-UP-Display gezeigt. Dabei wird ein Gefahrensymbol 28 in das Sichtfeld des Fahrers projiziert. Im gezeigten Fall handelt es sich um ein Warndreieck, das zur Hervorhebung noch stark umrandet ist. Die Einblendung erfolgt, nachdem die Bildauswertung der von der Kamera 150 gelieferten Bilder ergeben hat, dass ein Reh 13 am Fahrbahnrand steht. Die Bildauswertung findet in der Recheneinheit 40 statt. Dazu können bekannte Algorithmen zur Objekterkennung eingesetzt werden. Die Einblendung könnte nach Art der "augmented reality" auch an der Position des Rehs 13 im Sichtfeld des Fahrers verortet sein. Dann besteht aber die Gefahr, dass die Einblendung des Gefahrensymbols 28 das Reh 13 verdeckt und so der Fahrer nicht genau erkennen kann, worin die Gefahr besteht.

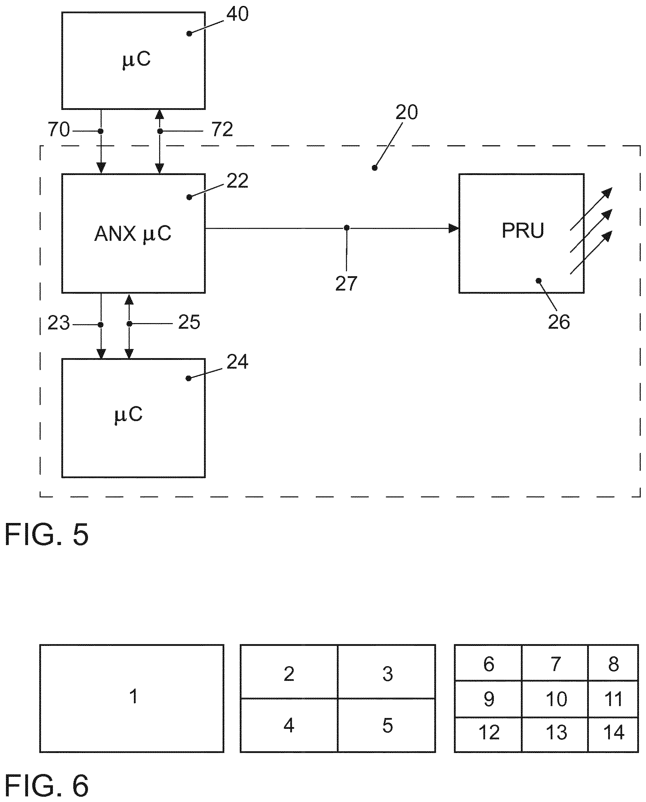

Die Fig. 5 zeigt ein Blockdiagramm für das Head-Up-Display 20. Das HUD 20 steht wie schon in Fig. 3 gezeigt mit der Recheneinheit 40 in Verbindung. Es besteht eine Verbindung für die Übertragung der Bilddaten. Es handelt sich dabei um die bereits erwähnte Datenleitung 70 für die Übertragung der berechneten Bilddaten im LVDS-Format. Die andere gezeigte Busverbindung 72 entspricht einer Busschnittstelle über die Steuerungs-, Konfigurations- und Statusdaten ausgetauscht werden können. Als Beispiel kommt eine Busschnittstelle der Art I2C (Inter Integrated Circuit Bus) in Betracht. Das Head-Up-Display selbst besteht im Wesentlichen aus drei Komponenten. Ganz wesentlich ist die Projektionseinheit 26, die als bilderzeugende Einheit neben den Lichtquellen auch die Optik zur Strahlformung beinhaltet. Diese Projektionseinheit 26 erhält die Bilddaten nicht direkt von der Recheneinheit 40 sondern von einer HUD-internen Ansteuereinheit 22, die die Bilddaten zur Ansteuerung der Projektionseinheit 26 in das geeignete Format umsetzt. Diese Ansteuereinheit 22 beinhaltet auch noch eine Bildanalysefunktion, die im Folgenden noch genauer erläutert wird. Zusätzlich ist in dem Head-Up-Display 20 noch ein weiterer Mikrocontroller 24 vorgesehen. Dieser dient zur Helligkeitssteuerung des Head-Up-Displays 20, wie auch für die Steuerung anderer Einstellungen. Auch in diesem Mikrocontroller 24 findet die Auswertung der Resultate der Bildanalysefunktion statt, wie noch im Folgenden erläutert wird.

Zunächst wird die Bildanalysefunktion näher erläutert. Fig. 6 zeigt das Prinzip der Bildanalyse. Dargestellt sind drei aufeinanderfolgende Bilder des Video-Datenstroms, den die Kamera 150 liefert. Typischerweise liefern die eingesetzten Kameras 30 Vollbilder/s. Das entspricht dem alt bekannten TV Standard NTSC. Im ersten Bild ist das Analysefenster auf die volle Bildgröße eingestellt. Beim zweiten Bild wird das Bild in vier gleich große Segmente eingeteilt. Die Bildanalyse findet für jedes einzelne Segment separat statt. Bei dem dritten dargestellten Bild wird das Bild in neun gleich großen Segmenten getrennt analysiert. Die Bildanalyse wird daher von links nach rechts immer mehr verfeinert.

Die Bildanalysefunktion würde bei 30 Hz Kameras dementsprechend 10 mal pro Sekunde durchlaufen. Die Bildanalyse eines einzelnen Segmentes bzw. des ganzen Bildes besteht darin, dass der Befüllungsgrad ermittelt wird. Dabei werden die Bildpunkte gezählt, die für die jeweilige Informations-Einblendung benötigt werden und diese Zahl wird ins Verhältnis gesetzt zur Gesamtzahl der Bildpunkte des von der HUD-Einheit anzeigbaren Bildes für den Fall, dass das Analysefenster sich über das ganze Bild erstreckt. Wenn ein Bildsegment analysiert wird, wird die Anzahl der bespielten Bildpunkte in diesem Segment ins Verhältnis gesetzt zur Gesamtzahl der Bildpunkte in dem jeweiligen Segment. Diese so ermittelten Werte werden in einem Speicher des Mikrocontrollers 24 zwischengespeichert und für den Auswertealgorithmus bereitgehalten.

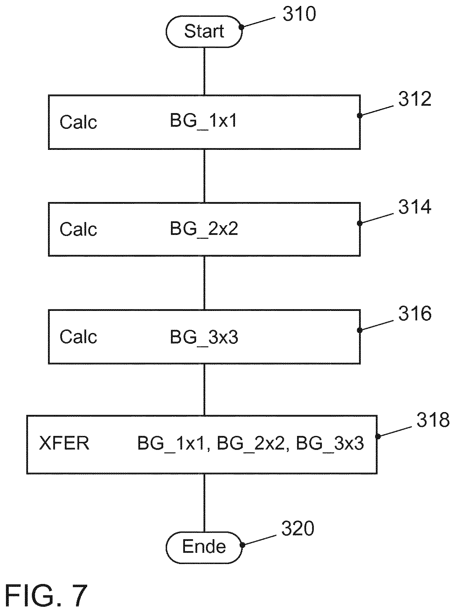

Die Datenermittlung der Analysefunktion wird anhand des in Fig. 7 dargestellten Flussdiagrams erläutert. Das Programm wird in der Ansteuereinheit 22 abgearbeitet. Der Programmstart ist mit der Bezugszahl 310 bezeichnet. Im Programmschritt 312 erfolgt die Berechnung des Befüllungsgrades für das erste zu analysierende Bild. Dies geschieht wie oben erläutert. Anschließend erfolgt im Programmschritt 314 die Berechnung der Befüllungsgrade für das folgende Bild, das in vier gleich große Segmente eingeteilt wird. Im Programmschritt 316 findet die Berechnung der Befüllungsgrade für das dritte Bild statt, das in vier gleich große Segmente eingeteilt wird. Nach Durchlaufen der Bildanalyseschritte findet in dem Programmschritt 318 die Übertragung der berechneten Daten an den Mikrocontroller 24 statt. Dort werden die empfangenen Daten im Zwischenspeicher abgelegt und für die weitere Auswertung bereit gehalten. Das Programm endet im Programmschritt 320.

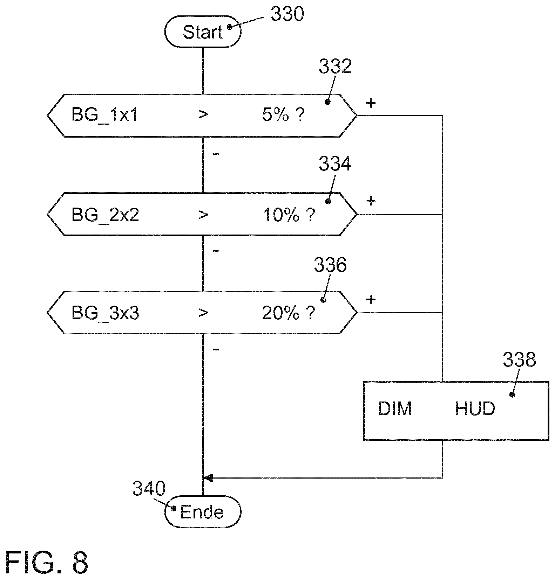

Der erste Teil der Datenauswertung wird anhand des Flussdiagramms in Fig. 8 erläutert. Dieses Programm wird vom Mikrocontroller 24 abgearbeitet. Nach dem Programmstart 330 erfolgt im Programmschritt 332 eine Bestimmung, ob der ermittelte Befüllungsgrad BG_1x1 des unsegmentierten Analysefensters größer als 5% ist. In dem Fall besteht schon eine Gefahr der Verdeckung von realen Objekten im Sichtfeld. Falls nicht, wird im Schritt 334 untersucht, ob einer der ermittelten Befüllungsgrade BG_2x2 des in vier gleich große Segmente eingeteilten Bildes den Wert von 10% überschreitet. Auch dann wird gefolgert, dass eine störende Verdeckung von Objekten stattfinden kann. Falls das auch nicht der Fall ist, wird im Programmschritt 336 untersucht, ob einer der ermittelten Befüllungsgrade BG_3x3 des in neun gleich große Segmente eingeteilten Bildes den Wert von 20% überschreitet. Falls dies auch nicht der Fall ist, wird geschlussfolgert, dass keine Gefahr der Verdeckung vorliegt und das Programm im Programmschritt 340 beendet. In den anderen Fällen verzweigt das Programm zum Programmschritt 338, und darin wird eine Maßnahme durchgeführt, die die Gefahr der Verdeckung abwendet. Als Beispiel einer solchen Maßnahme wird die Abschaltung der Einblendung und das Verringern der Helligkeit der Einblendung genannt. Zwar wäre es auch möglich, die Recheneinheit 40 darüber zu informieren, so dass diese dann eine reduzierte Form der Einblendung berechnen kann, dies kann aber auf Probleme bei der praktischen Realisierung stoßen. Insbesondere besteht dafür ein höherer Entwicklungs- und Testaufwand. Gegebenenfalls müssten dafür andere Mikrocontroller und Schnittstellen eingesetzt werden.

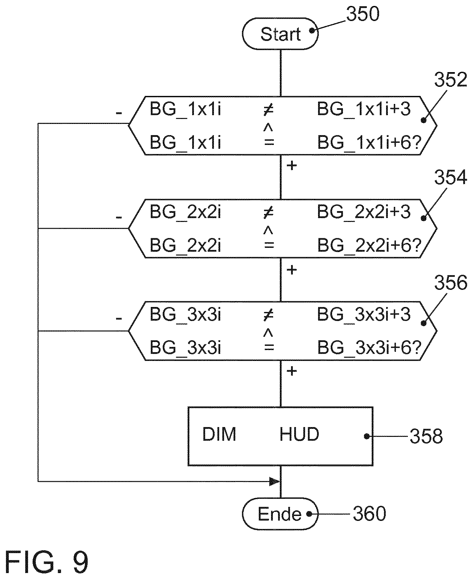

Der zweite Teil der Datenauswertung wird anhand des Flussdiagramms in Fig. 9 erläutert. Das Programm startet im Programmschritt 350. Im Programmschritt 352 wird untersucht, ob die aufeinanderfolgenden Werte BG_1x1i und BG_1x1i+3 ungleich sind, hingegen BG_1x1i und BG1x1_i+6 gleich sind. Dabei bedeutet der Index i die Bildnummer. Falls ja, wird im Programmschritt 354 der weitere Test durchgeführt, ob die aufeinanderfolgenden Werte BG_2x2i und BG_2x2i+3 ungleich sind, hingegen BG_2x2i und BG_2x2i+6 gleich sind. Falls ja wird im Programmschritt 356 noch der weitere Test durchgeführt, ob BG_3x3i und BG_3x3i+3 ungleich sind, hingegen BG_2x2i und BG_2x2i+6 gleich sind. Falls dies auch noch erfüllt ist, wird gefolgert, dass eine pulsierende/blinkende Darstellung der Einblendung gegeben ist, die unerwünscht ist, weil sie vom Geschehen auf der Straße ablenken kann. Diese spezielle Form des Tests würde ein Blinken mit einer Frequenz von ca. 4 Hz erkennen. Für andere Frequenzen kann der Test entsprechend angepasst werden.

Es hängt aber von der Leistungsfähigkeit des Spezial-Chips ab, der die Bildanalyse durchführt, wieviel Bilder pro Sekunde analysiert werden können. In einer anderen Implementierungsvariante kann der Chip 60 Bildsegmente pro Sekunde analysieren. Bei der Einteilung der Bilder in 14 Bildsegmente, wie in Fig. 6 gezeigt, werden pro Zyklus 14 Bildsegmente analysiert. Aufgrund der dafür benötigten Zeit (ca. 250ms) und des weiter laufenden Videostroms (30fps) sind darin 7 aufeinanderfolgende Bilder involviert. Konkret läuft es bei dieser Variante so ab: Von dem ersten Bild wird das Komplettbildsegment 1 und der Bildquadrant mit der Nummer 2 analysiert. Von dem zweiten Bild im Videostrom werden die beiden Bildquadranten mit der Nummer 3 und 4 analysiert. Von dem dritten Bild im Videostrom werden der Bildquadrant mit der Nummer 5 und das 3x3 Bildsegment mit der Nummer 6 analysiert. Von dem vierten Bild im Videostrom werden die beiden 3x3 Bildsegmente mit der Nummer 7 und 8 analysiert. Von dem fünften Bild im Videostrom werden die beiden 3x3 Bildsegmente mit der Nummer 9 und 10 analysiert. Von dem sechsten Bild im Videostrom werden die beiden 3x3 Bildsegmente mit der Nummer 11 und 12 analysiert. Von dem siebenten Bild im Videostrom werden die beiden 3x3 Bildsegmente mit der Nummer 13 und 14 analysiert. Für diese Variante sind die Flussdiagramme in den Figuren 7 bis 9 entsprechend anzupassen.

In anderen Ausführungsformen kann eine andere Segmentierung der HUD Anzeigeeinheit 20 für den Test vorgenommen werden. Beispielsweise kann die Anzahl der Segmente auch 4 x 4 = 16 Segmente betragen.

Die Abfragen, ob zu vergleichende Werte gleich sind, können auch so gestaltet werden, dass ein bestimmter Toleranzbereich an Abweichungen akzeptiert wird, in dem bei dem Vergleich noch auf Gleichheit erkannt wird.

Alle hierin erwähnten Beispiele wie auch bedingte Formulierungen sind ohne Einschränkung auf solche speziell angeführten Beispiele zu verstehen. So wird es zum Beispiel von Fachleuten anerkannt, dass das hier dargestellte Blockdiagramm eine konzeptionelle Ansicht einer beispielhaften Schaltungsanordnung darstellt. In ähnlicher Weise ist zu erkennen, dass ein dargestelltes Flussdiagramm, Zustandsübergangsdiagramm, Pseudocode und dergleichen verschiedene Varianten zur Darstellung von Prozessen darstellen, die im Wesentlichen in computerlesbaren Medien gespeichert und somit von einem Computer oder Prozessor ausgeführt werden können. Das in den Patentansprüchen genannte Objekt kann ausdrücklich auch eine Person sein.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und / oder Field Programmable Gate Arrays (FPGAs) umfassen. Vorzugsweise wird das vorgeschlagene Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform, die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein oder ein Teil, der über das Betriebssystem ausgeführt wird.

Die Offenbarung ist nicht auf die hier beschriebenen Ausführungsbeispiele beschränkt. Es gibt Raum für verschiedene Anpassungen und Modifikationen, die der Fachmann aufgrund seines Fachwissens als auch zu der Offenbarung zugehörend in Betracht ziehen würde.

Die Erfindung wird in den Ausführungsbeispielen am Beispiel des Einsatzes in Fahrzeugen genauer erläutert. Hier wird auch auf die Einsatzmöglichkeit bei Flugzeugen und Helikoptern zum Beispiel bei Landemanövern oder Sucheinsätzen etc. hingewiesen.

Es wird aber darauf hingewiesen, dass der Einsatz nicht darauf beschränkt ist. Die Erfindung kann immer dann eingesetzt werden, wenn mit AR-Einblendungen das Sichtfeld eines Fahrers, einer Bedienperson oder auch einfach nur einer Person mit Datenbrille angereichert werden kann.

Auch bei ferngesteuerten Geräten wie Robotern oder Drohnen, bei denen die Fernsteuerung über einen Monitor erfolgt, auf dem ein Kamerabild wiedergegeben wird, können AR Einblendungen die Bedienung erleichtern. Es besteht hier auch eine Einsatzmöglichkeit.

### Bezugszeichenliste

- 10: Fahrzeug
- 13: Reh
- 20: Head-Up Display HUD
- 20': Display Kombiinstrument
- 21: virtuelle Projektionsfläche
- 22: Analyse Chip
- 23: LVDS Bus
- 24: Mikrocontroller
- 25: Bus
- 26: Projektionseinheit
- 27: Datenleitung
- 28: Gefahrensymbol
- 30: berührungsempfindliche Anzeigeeinheit
- 40: Recheneinheit
- 50: Eingabeeinheit
- 60: Speichereinheit
- 70: Datenleitung zur Anzeigeeinheit
- 80: Datenleitung zur Speichereinheit
- 90: Datenleitung zur Eingabeeinheit
- 100: Datenbus
- 110: Kombiinstrument
- 120: Telefon
- 130: Navigationsgerät
- 140: Radio
- 150: Kamera
- 160: Kommunikationsmodul
- 200: Infotainmentsystem
- 310-: verschiedene
- 360: Programmschritte

## Patentansprüche

1. Computerimplementiertes Verfahren zur Vermeidung einer Sichtfeldstörung für eine Bedienperson eines Objektes durch ein in das Sichtfeld der Bedienperson eingeblendetes Bild mit einer virtuellen Zusatzinformation, bei dem eine Bildanalyse des Bildes mit der virtuellen Zusatzinformation durchgeführt wird, mit der überprüft wird, ob durch die Einblendung des Bildes mit der virtuellen Zusatzinformation eine Sichtfeldstörung hervorgerufen wird, und eine Maßnahme zur Unterbindung der Sichtfeldstörung durchgeführt wird, wenn eine Sichtfeldstörung erkannt worden ist, **dadurch gekennzeichnet, dass** bei einer Bildanalyse mehrerer aufeinanderfolgender Bilder von Bild zu Bild eine immer feinere Einteilung des Bildes in Segmente erfolgt und die Segmente einzeln analysiert werden, wobei der durch die Einblendung der virtuellen Zusatzinformation bewirkte Befüllungsgrad des jeweiligen Bildes bzw. eines oder mehrerer Segmente des jeweiligen Bildes ermittelt wird, wobei sich der Befüllungsgrad durch Berechnung des Verhältnisses von der Anzahl der durch die Einblendung der virtuellen Zusatzinformation befüllten Bildpunkte zu der Gesamtzahl der Bildpunkte, die befüllt werden können, ergibt.

2. Verfahren nach Anspruch 1, wobei mit der Bildanalyse überprüft wird, ob durch die Einblendung ein Problem mit der Verdeckung von Bereichen im Sichtfeld der Bedienperson verursacht wird.

3. Verfahren nach Anspruch 1 oder 2, wobei durch eine Bildanalyse mehrerer aufeinanderfolgender Bilder überprüft wird, ob durch die Einblendung ein störendes Blinken, Flackern oder Pulsieren in dem Sichtfeld der Bedienperson verursacht wird.

4. Verfahren nach einem der vorhergehenden Ansprüche, wobei zur Prüfung auf Verdeckung von Bereichen im Sichtfeld jeweils drei aufeinanderfolgende Bilder analysiert werden, wobei für das erste Bild der Befüllungsgrad des Gesamtbildes bestimmt wird, für das zweite Bild die Befüllungsgrade von vier gleich großen Bildsegmenten bestimmt werden, und für das dritte Bild die Befüllungsgrade von neun gleich großen Bildsegmenten bestimmt werden.

5. Verfahren nach Anspruch 4, wobei die ermittelten Befüllungsgrade des Bildes und der Segmente abgestuft überprüft werden und ein Vorliegen eines Problems mit der Verdeckung von Bereichen im Sichtfeld der Bedienperson erkannt wird, wenn bei der Überprüfung festgestellt wird, dass wenigstens eines der überprüften Kriterien erfüllt ist.

6. Verfahren nach einem der Ansprüche 3 bis 5, wobei zur Prüfung, ob durch die Einblendung ein störendes Blinken, Flackern oder Pulsieren in das Sichtfeld der Bedienperson verursacht wird, die ermittelten Befüllungsgrade von einer Anzahl von aufeinanderfolgenden Prüfdurchläufen analysiert werden, wobei ein Vorliegen eines Problems mit einem störenden Blinken, Flackern oder Pulsieren der Einblendung im Sichtfeld der Bedienperson erkannt wird, wenn periodische Änderungen der ermittelten Befüllungsgrade festgestellt werden.

7. Verfahren nach einem der vorhergehenden Ansprüche, wobei zur Unterbindung der Sichtfeldstörung eine Abschaltung der Einblendung oder eine Verringerung der Helligkeit der Einblendung erfolgt.

8. Verfahren nach einem der vorhergehenden Ansprüche, wobei die Einblendung der virtuellen Zusatzinformation kontaktanalog zu einem oder mehreren erkannten Objekten in das Sichtfeld der Bedienperson eingeblendet wird.

9. Vorrichtung zur Vermeidung einer Sichtfeldstörung für eine Bedienperson eines Objektes, mit einer Anzeigeeinheit (20), mit der ein Bild mit einer virtuellen Zusatzinformationen in das Sichtfeld der Bedienperson des Objektes eingeblendet werden kann, einer Bildanalyseeinheit (22) und einer Auswerteeinheit (24), mit denen eine Bildanalyse des Bildes mit der virtuellen Zusatzinformation durchgeführt wird und überprüft wird, ob durch die Einblendung des Bildes mit der virtuellen Zusatzinformationen eine Sichtfeldstörung hervorgerufen wird, wobei die Bildanalyseeinheit (22) und Auswerteeinheit (24) ausgelegt sind, die Sichtfeldstörung zu unterbinden, wenn eine Sichtfeldstörung erkannt worden ist, **dadurch gekennzeichnet, dass** durch die Bildanalyseeinheit (22) und die Auswerteeinheit (24) bei einer Bildanalyse mehrerer aufeinanderfolgender Bilder von Bild zu Bild eine immer feinere Einteilung des Bildes in Segmente erfolgt und die Segmente einzeln analysiert werden, wobei der durch die Einblendung der virtuellen Zusatzinformation bewirkte Befüllungsgrad des jeweiligen Bildes bzw. eines oder mehrerer Segmente des jeweiligen Bildes ermittelt wird, wobei sich der Befüllungsgrad durch Berechnung des Verhältnisses von der Anzahl der durch die Einblendung der virtuellen Zusatzinformation befüllten Bildpunkte zu der Gesamtzahl der Bildpunkte, die befüllt werden können, ergibt.

10. Vorrichtung nach Anspruch 9, wobei die Bildanalyseeinheit (22) und die Auswerteeinheit (24) weiterhin so ausgelegt sind, dass sie eine Abschaltung der Einblendung oder eine Verringerung der Helligkeit der Einblendung bewirken, wenn eine Sichtfeldstörung erkannt worden ist.

11. Fahrzeug, **dadurch gekennzeichnet, dass** das Fahrzeug (10) eine Vorrichtung nach einem der Ansprüche 9 oder 10 aufweist.

12. Computerprogramm, welches ausgelegt ist, bei Abarbeitung in einer Recheneinheit, die eine Bildanalyseeinheit (22) und eine Auswerteeinheit (24) umfasst, die Schritte des Verfahrens zur Vermeidung einer Sichtfeldstörung für eine Bedienperson eines Objektes nach einem der Ansprüche 1 bis 8 durchzuführen.

## Claims

1. A computer-implemented method for preventing a field-of-view disturbance for an operator of an object due to an image with virtual additional information superposed into the field of view of the operator, wherein an image analysis of the image with the virtual additional information is performed to check whether the superposition of the image with the virtual additional information causes a field-of-view disturbance, and a measure for preventing the field-of-view disturbance is performed when a field-of-view disturbance has been detected, **characterized in that** in an image analysis of a plurality of successive images, the image is divided from image to image into increasingly finer segments and the segments are analyzed individually, wherein the filling degree of the respective image or of one or more segments of the respective image, caused by the superposition of the virtual additional information, is determined, wherein the filling degree is determined by calculating the ratio of the number of image points filled by the superposition of the virtual additional information to the total number of image points that are fillable.

2. The method according to claim 1, wherein the image analysis is used to check whether the superposition causes a problem relating to the obscuration of regions in the field of view of the operator.

3. The method according to claim 1 or 2, wherein an image analysis of a plurality of successive images is used to check whether the superposition causes a bothersome flashing, flickering, or pulsation in the field of view of the operator.

4. The method according to any one of the preceding claims, wherein, for checking obscuration of regions in the field of view, three successive images are analyzed, wherein for the first image, the filling degree of the total image is determined, for the second image, the filling degrees of four image segments of identical size are determined, and for the third image, the filling degrees of nine image segments of identical size are determined.

5. The method according to claim 4, wherein the determined filling degrees of the image and of the segments are checked in stages, and the presence of a problem relating to the obscuration of regions in the field of view of the operator is detected when it is determined in the check that at least one of the checked criteria is fulfilled.

6. The method according to any one of claims 3 to 5, wherein, for checking whether the superposition causes a bothersome flashing, flickering or pulsation in the field of view of the operator, the determined filling degrees from a number of successive check cycles are analyzed, wherein the presence of a problem relating to a bothersome flashing, flickering or pulsation of the superposition in the field of view of the operator is detected when periodic changes in the determined filling degrees are detected.

7. The method according to any one of the preceding claims, wherein, for preventing the field-of-view disturbance, the superposition is switched off or the brightness of the superposition is reduced.

8. The method according to any one of the preceding claims, wherein the superposition of the virtual additional information is superposed into the field of view of the operator in a contact-analogous manner with respect to one or more detected objects.

9. An apparatus for preventing a field-of-view disturbance for an operator of an object, comprising a display unit (20) with which an image with virtual additional information can be superposed into the field of view of the operator of the object, an image analysis unit (22) and an evaluation unit (24) by means of which an image analysis of the image with the virtual additional information is performed and a check is made as to whether the superposition of the image with the virtual additional information causes a field-of-view disturbance, wherein the image analysis unit (22) and the evaluation unit (24) are configured to prevent the field-of-view disturbance when a field-of-view disturbance has been detected, **characterized in that,** by means of the image analysis unit (22) and the evaluation unit (24), in an image analysis of a plurality of successive images, the image is divided from image to image into increasingly finer segments and the segments are analyzed individually, wherein the filling degree of the respective image or of one or more segments of the respective image, caused by the superposition of the virtual additional information, is determined, wherein the filling degree is determined by calculating the ratio of the number of image points filled by the superposition of the virtual additional information to the total number of image points that are fillable.

10. The apparatus according to claim 9, wherein the image analysis unit (22) and the evaluation unit (24) are further configured to switch off the superposition or to reduce the brightness of the superposition when a field-of-view disturbance has been detected.

11. A vehicle, **characterized in that** the vehicle (10) has an apparatus according to either of claims 9 or 10.

12. A computer program configured, when executed in a computation unit comprising an image analysis unit (22) and an evaluation unit (24), to perform the steps of the method for avoiding a field-of-view disturbance for an operator of an object according to any one of claims 1 to 8.

## Revendications

1. Procédé mis en œuvre par ordinateur permettant d'éviter une perturbation de champ de vision pour un opérateur d'un objet par une image insérée dans le champ de vision de l'opérateur comportant une information supplémentaire virtuelle, dans lequel une analyse d'image de l'image comportant l'information supplémentaire virtuelle est réalisée, avec laquelle on vérifie si une perturbation de champ de vision est provoquée par l'insertion de l'image comportant l'information supplémentaire virtuelle, et une mesure permettant de supprimer la perturbation de champ de vision est réalisée lorsqu'une perturbation de champ de vision a été reconnue, **caractérisé en ce que** lors d'une analyse d'image de plusieurs images successives, une division de plus en plus fine de l'image en segments est effectuée d'image en image et les segments sont analysés individuellement, dans lequel le degré de remplissage de l'image respective ou des un ou plusieurs segments de l'image respective, provoqué par l'insertion de l'information supplémentaire virtuelle, est déterminé par l'analyse d'image, dans lequel le degré de remplissage est obtenu en calculant le rapport entre le nombre de points d'image remplis par l'insertion de l'information supplémentaire virtuelle et le nombre total de points d'image qui peuvent être remplis.

2. Procédé selon la revendication 1, dans lequel l'analyse d'image permet de vérifier si l'insertion provoque un problème d'occultation de zones dans le champ de vision de l'opérateur.

3. Procédé selon la revendication 1 ou 2, dans lequel une analyse d'image de plusieurs images successives permet de vérifier si l'insertion provoque un clignotement, un scintillement ou une pulsation gênant(e) dans le champ de vision de l'opérateur.

4. Procédé selon l'une des revendications précédentes, dans lequel, pour la vérification de l'occultation de zones dans le champ de vision, respectivement trois images successives sont analysées, dans lequel le degré de remplissage de l'image globale est déterminé pour la première image, les degrés de remplissage de quatre segments d'image de même taille sont déterminés pour la deuxième image, et des degrés de remplissage de neuf segments d'image de même taille sont déterminés pour la troisième image.

5. Procédé selon la revendication 4, dans lequel les degrés de remplissage déterminés de l'image et des segments sont vérifiés de manière échelonnée et une présence d'un problème d'occultation de zones dans le champ de vision de l'opérateur est reconnu s'il est constaté lors de la vérification qu'au moins l'un des critères vérifiés est rempli.

6. Procédé selon l'une des revendications 3 à 5, dans lequel, pour la vérification si l'insertion provoque un clignotement, un scintillement ou une pulsation gênant(e) dans le champ de vision de l'opérateur, les degrés de remplissage déterminés d'un certain nombre de passages de vérification successifs sont analysés, dans lequel une présence d'un problème de clignotement, de scintillement ou de pulsation gênant(e) de l'insertion dans le champ de vision de l'opérateur est reconnu lorsque des modifications périodiques des degrés de remplissage déterminés sont constatées.

7. Procédé selon l'une des revendications précédentes, dans lequel, pour la suppression de la perturbation de champ de vision, une coupure de l'insertion ou une réduction de la luminosité de l'insertion est effectuée.

8. Procédé selon l'une des revendications précédentes, dans lequel l'insertion de l'information virtuelle supplémentaire est insérée dans le champ de vision de l'opérateur de manière analogue au contact avec un ou plusieurs objets reconnus.

9. Dispositif permettant d'éviter une perturbation de champ de vision d'un opérateur d'un objet, comportant une unité d'affichage (20), avec laquelle une image comportant une information supplémentaire virtuelle peut être insérée dans le champ de vision de l'opérateur de l'objet, une unité d'analyse d'image (22) et une unité d'évaluation (24), avec lesquelles une analyse d'image de l'image comportant l'information supplémentaire virtuelle est réalisée et il est vérifié si une perturbation de champ de vision est provoquée par l'insertion de l'image comportant l'information supplémentaire virtuelle, dans lequel l'unité d'analyse d'image (22) et l'unité d'évaluation (24) sont conçues pour empêcher la perturbation de champ de vision lorsqu'une perturbation de champ de vision a été reconnue, **caractérisé en ce que** l'unité d'analyse d'image (22) et l'unité d'évaluation (24) effectuent une division de plus en plus fine de l'image en segments lors d'une analyse d'image de plusieurs images successives d'image en image, et les segments sont analysés individuellement, dans lequel le degré de remplissage de l'image respective ou d'un ou plusieurs segments de l'image respective, provoqué par l'insertion de l'information supplémentaire virtuelle, est déterminé dans lequel le degré de remplissage est obtenu en calculant le rapport entre le nombre de points d'image remplis par l'insertion de l'information supplémentaire virtuelle et le nombre total de points d'image qui peuvent être remplis.

10. Dispositif selon la revendication 9, dans lequel l'unité d'analyse d'image (22) et l'unité d'évaluation (24) sont en outre conçues de manière à provoquer une coupure de l'insertion ou une réduction de la luminosité de l'insertion lorsqu'une perturbation de champ de vision a été reconnue.

11. Véhicule, **caractérisé en ce que** le véhicule (10) présente un dispositif selon l'une quelconque des revendications 9 ou 10.

12. Programme d'ordinateur qui est conçu pour, lors du traitement dans une unité de calcul, qui comprend une unité d'analyse d'image (22) et une unité d'évaluation (24), réaliser les étapes du procédé permettant d'éviter une perturbation de champ de vision pour un opérateur d'un objet selon l'une des revendications 1 à 8.
